(19) **Europäisches Patentamt**
**European Patent Office**
**Office européen des brevets**

(11) **EP 1 709 426 B1**

(12) **EUROPEAN PATENT SPECIFICATION**

(45) Date of publication and mention
of the grant of the patent:
**16.03.2011 Bulletin 2011/11**

(51) Int Cl.:
**G01N 21/39** (2006.01)     **G01N 21/35** (2006.01)

(21) Application number: **04702759.4**

(22) Date of filing: **16.01.2004**

(86) International application number:
**PCT/IB2004/000099**

(87) International publication number:
**WO 2005/078413 (25.08.2005 Gazette 2005/34)**

(54) **METHOD FOR PERFORMING COMPOSITION ANALYSIS OF A NATURAL GAS SAMPLE**

VERFAHREN ZUR DURCHFÜHRUNG EINER ZUSAMMENSETZUNGSANALYSE EINER ERDGASPROBE

PROCEDE PERMETTANT D'ANALYSER LA COMPOSITION D'UN ECHANTILLON DE GAZ NATUREL

(84) Designated Contracting States:
**DE FR IT NL**

(43) Date of publication of application:
**11.10.2006 Bulletin 2006/41**

(73) Proprietor: **Actaris Gaszählerbau GmbH**
**76185 Karlsruhe (DE)**

(72) Inventors:
• **GAYRAL, Bruno**
**F-38000 Grenoble (FR)**
• **VANNUFFELEN, Stephane**
**Tokyo 155-0031 (JP)**
• **THERON, Bernard**
**F-91300 Massy (FR)**

(74) Representative: **Hervouet, Sylvie et al**
**Feray Lenne Conseil**
**Le Centralis**
**63, avenue du Général Leclerc**
**92340 Bourg-la-Reine (FR)**

(56) References cited:
**EP-A- 1 103 804     EP-A- 1 174 705**
**WO-A-01/57499     US-A- 5 859 430**

• **MERMELSTEIN C ET AL: "Physics and applications of III-Sb-based type-I QW diode lasers" NOVEL IN-PLANE SEMICONDUCTOR LASERS, SAN JOSE, CA, USA, 21-23 JAN. 2002, vol. 4651, pages 173-184, XP001180965 Proceedings of the SPIE - The International Society for Optical Engineering, 2002, SPIE-Int. Soc. Opt. Eng, USA ISSN: 0277-786X**
• **MCALEAVEY F J ET AL: "Narrow linewidth, tunable Tm/sup 3+/-doped fluoride fiber laser for optical-based hydrocarbon gas sensing" IEEE JOURNAL OF SELECTED TOPICS IN QUANTUM ELECTRONICS, AUG. 1997, IEEE, USA, vol. 3, no. 4, pages 1103-1111, XP000734640 ISSN: 1077-260X**
• **MCALEAVEY F J ET AL: "Tunable and efficient diode-pumped Tm/sup 3+/-doped fluoride fiber laser for hydrocarbon gas sensing" FIBER AND INTEGRATED OPTICS, 1997, TAYLOR & FRANCIS, USA, vol. 16, no. 4, pages 355-368, XP009030091 ISSN: 0146-8030**
• **PATENT ABSTRACTS OF JAPAN vol. 018, no. 018 (P-1673), 12 January 1994 (1994-01-12) & JP 05 256769 A (TOKYO ELECTRIC POWER CO INC: THE;OTHERS: 02), 5 October 1993 (1993-10-05)**

## Description

The present invention relates to the field of composition analysis of a natural gas sample via tunable laser diode absorption spectroscopy in order to determine the calorific value of the natural gas.

It is desirable to be able to perform energy metering at the point of delivery of natural gas, at least for certain users, such as industry, or for certain groups of users within a public distribution network.

Energy metering at the point of delivery is defined as measuring, in a single location, magnitudes that enable the quantity of energy delivered to be determined. These magnitudes are, in particular, volume, pressure, temperature, gas composition, calorific value, and energy flow rate.

The point of delivery corresponds to the expansion station where the gas is expanded, regulated, and metered. Such a station is designed to guarantee continuity of gas supply even in the event of one of the elements of the station failing.

The composition of natural gas as supplied to transport and distribution networks can vary, which gives rise to variations in the calorific value of the gas, and consequently to variations in the mount of energy supplied for given volume of delivered gas.

Industrial clients of transport and distribution networks desire to be able to optimise methods that require the use of gas, and consequently, even if they do not know the exact composition of the natural gas used, they would still like to be able to determine the calorific value of the natural gas they are consuming.

For their part, the suppliers of gas would like to know the calorific value of the gas they have delivered so as to be able to bill their clients as a function of the mount of energy actually supplied instead of merely as a function of the volume of gas delivered, since volume corresponds to varying mounts of energy depending on the calorific value of the gas.

For all of these reasons, it is desirable to be able to determine the calorific value of a natural gas with accuracy to within better than 1%.

Proposals have already been made to measure the calorific value using fast chromatographs or calorimeters. Those methods remain relatively expensive and they are not fully satisfactory for the intended application since they require samples of the gas to be taken, measurements to be performed in special test cabins, and standard gas to be used, all of which implies that the length of time required to perform a measurement prevents it from being done in real time.

Another known solution is to use an infrared technique to measure the calorific value of a natural gas. In that technique, a specific absorption line in the near infrared is initially selected for each component of the gas, the gas is illuminated by a laser beam having a wavelength close to the wavelength of the selected absorption lines, and a spectrum width that is narrower than the widths of the selected absorption lines, the wavelength of the light beam is varied to scan through the selected absorption lines, the intensity of the light beam after passing through the gas is measured both at the wavelengths of the selected absorption lines and at other wavelengths, and the relative concentrations of the components of the gas are deduced therefrom by calculation and hence the calorific value of the gas can also be deduced.

However, this solution raises some difficult problems because some noise and drifts will occur in the measurement of the absorption inducing therefore a poor accuracy.

EP1174705-A discloses a method of compositional analysis for determining the calorific quality of natural gas by "on-line" determination of the concentrations of its component gases, in particular methane, ethane, propane and butane. A single laser is used in the absorption path comprising a temperature scanned wavelength range in the near to mid infrared up to 2.5 micron which is selected to encompass each of the natural gas components to be detected so that each of these components must have a spectral line within this range to permit its concentration to be determined. One exemplary range selected is 1,685 micron to 1,689 micron in which methane and ethane have sharp spectral lines and spectral lines for butane and propane are also present.

One object of the present invention is to provide a method for performing composition analysis of a natural gas sample via tunable laser diode absorption spectroscopy allowing to determine the calorific value of said natural gas with sufficient accuracy.

More precisely, the present invention provides a method for performing composition analysis of a natural gas sample via tunable laser diode absorption spectroscopy comprising the steps of:

- using said tunable laser diode for sending a laser beam through a cell comprising said natural gas sample,
- after interaction of said laser beam with said natural gas sample within said cell, detecting said laser beam and determining the absorption of the gas,

said laser diode being scanned in wavelength via a current or temperature driver with a predetermined continuous single mode tuning, range and a central wavelength comprised in the [2.292 $\mu$m - 2.310 $\mu$m] interval.

As it will be shown below, the fact of using a central wavelength belonging to the region ranging from 2.292 $\mu$m to 2.310 $\mu$m is going to induce a very favourable situation for reducing the noise transfer factor, i.e. for getting a higher accuracy.

Advantageously, said predetermined tuning range is equal to 4 nm.

Other characteristics and advantages of the present invention will appear reading the following description of an embodiment of the invention, given by way of example and with reference to the accompanying drawing, in which:

- Figure 1 shows schematically a measuring set-up for implementing the method according to the invention,
- Figure 2a and 2b illustrate the concept of orthogonality for absorption spectra,
- Figure 3 shows a graph representing the noise transfer factor as a function of central wavelength,
- Figure 4 shows a zoom of the graph represented in figure 3.

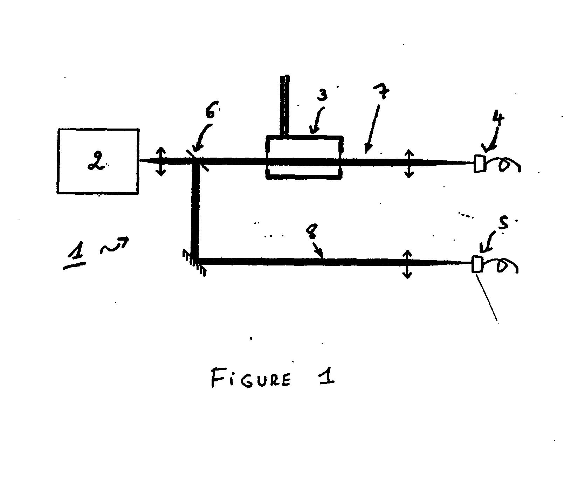

Figure 1 shows schematically a measuring set-up 1 for implementing the method according to the invention.

Said set-up 1 comprises:

- a tunable laser diode 2 controlled by a current or a temperature controller,
- a sample cell 3,
- two photodiodes 4 and 5,
- a beam-splitter 6,
- a gas measurement path 7,
- a reference path 8.

A natural gas sample to be analysed in placed inside the sample cell 3. The collimated laser beam is split by the beam-splitter 6 so as to send part of the laser beam to the reference photodiode 5 and part of the beam to the sample cell 3. After interaction with the natural gas within the sample cell 3, the laser beam is detected by the other photodiode 4. The ratio of the two photodiodes signals $V = \dfrac{PD1}{PD2}$ measures the absorption of the gas, wherein PD1 is the signal of the photodiode 4 and PD2 is the signal of the photodiode 5. More precisely, this ratio has to be normalized by its value in absence of gas in the cell to give the absorption of the gas:

$$\alpha(\lambda).L = -\ln\left(\frac{V_{gas}(\lambda)}{V_{empty}(\lambda)}\right),$$

where $\alpha(\lambda)$ is the gas absorption at wavelength $\lambda$, L is the gas cell length, $V_{gas}$ is the photodiode ratio when the gas is in the cell, $V_{empty}$ the same ratio with an empty cell.

The laser 2 is scanned in wavelength allowing to obtain the absorption spectrum of the gas mixture over the laser scanning or tuning range. Said laser 2 is scanned in wavelength via a current or temperature driver with a continuous single mode scanned over around 4 nm so as to obtain characteristic spectral features of the various molecules within the measured spectrum.

The absorption spectrum can then be projected on various calibrated absorption spectra so as to deduce the composition of the analysed gas mixture. The output of the analysis is directly expressed in mol/m$^3$, that is, an absolute concentration. Once the concentrations in the various alkanes are known, the superior calorific value can be obtained by weighing the concentrations by the individual calorific values of the reference gases.

From the absorption measurement, the absorption spectrum of the unknown gas mixture can be determined. The absorption spectrum can be represented as a vector a containing all the absorption coefficients for the scanned wavelengths $\lambda_1, \lambda_2,...\lambda_n$:

$$\alpha = \begin{bmatrix} \alpha(\lambda_1) \\ \alpha(\lambda_2) \\ \vdots \\ \alpha(\lambda n) \end{bmatrix}.$$

The calibrated gas spectra can be also represented in this way in a matrix. The reference gases can be taken to be pure gases (for Instance Methane, Ethane, Propane, Butane, Isobutane). The calibrated absorption matrix of the pure gases is then given by (each column being a vector of absorption with n lines):

$$\beta = \begin{bmatrix} \alpha_M & \alpha_E & \alpha_P & \alpha_B & \alpha_{IsoB} \end{bmatrix}$$

It is then clear that the concentration of the gas mixture in each alkane is related to the matrix $\beta$ by:

$$\alpha = \beta \begin{bmatrix} C_M \\ C_E \\ C_P \\ C_B \\ C_{IsoB} \end{bmatrix} = \beta C.$$

This equation can be inverted according to the least square method leading to the following relationship that gives the concentrations of the gases in the unknown mixture as a function of the measured absorption spectrum:

$$C = \left[\beta^T \beta\right]^{-1} \beta^T \alpha$$

Once the concentrations are determined, it is then straightforward to deduce the superior calorific value SCV through a linear relationship:

$$SCV = h^T C,$$

where $h^T$=[891; 1561; 2220; 2878 2878] kJ/mole represents the molar calorific value for methane, ethane, propane, butane and isobutane.

To sum-up, from a calibrated absorption matrix $\beta$ and a measured absorption spectrum $\alpha$ from an unknown mixture, the superior calorific value SCV can be deduced by:

$$SCV = h^T[\beta^T\beta]^{-1}\beta^T\alpha$$

In the measurement of the absorption, some noise and drifts will occur. This will transfer into noise and drift on the measurement of the superior calorific value. It is therefore important that the noise is not too much enhanced when transferred from the initial absorption measurement to the superior calorific value. For a given wavelength scanning range, the noise transfer factor depends on the number of measurement points taken in the spectrum and on the spectral features of the absorption spectra of the reference gases (i.e. pure gases).

It is indeed quite clear that the more points are measured, the more information will be gathered on the spectrum of the unknown mixture, and the more precise will be the estimation of the PCS.

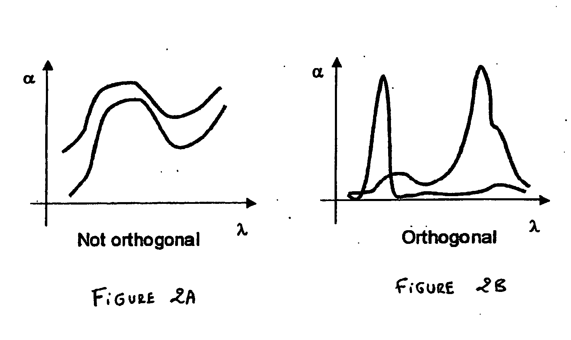

The spectral features of the absorption spectra of the reference gases also play a major role. This Is quite obvious when considering two examples of absorption spectra of two gases as shown in figure 2a and 2b.

If the spectra of the two gases look "alike" as in figure 2a, then a small error on the measurement of the absorption spectrum of the unknown mixture will transfer into a large error on the estimation of the concentrations and thus of the SCV.

Conversely, if the two spectra have peaks that are very different in shape and location (the two spectra can be said to be orthogonal) as in figure 2b, then the noise transfer will be much smaller. It is thus clear that the choice of the central wavelength of the scanning range of the laser is of importance in determining the noise transfer.

Hereafter, it is proposed to quantify the noise transfer and thus the "orthogonality" of the pure gases spectra. This will then allow to measure the noise transfer for a given scanning range and a given number of measured points within the scanning range as a function of the central wavelength of the spectral scan.

As the relationship between the measured spectrum $\alpha$ and the superior calorific value is, linear, the noise transfer can be expressed analytically as a function of the parameters of the measurement:

$$\sigma_{SCV}^2 = h^T[\beta^T\beta]^{-1}h\sigma_\alpha^2$$

The noise transfer factor $\sqrt{h^T[\beta^T\beta]^{-1}h}$ is a measurement of the noise transfer between the absorption coefficient measurement and the superior calorific value. For a given scanning range and a given number of measurement points within the scanning range, this noise transfer factor can be plotted as a function of the central wavelength of the scanning range.

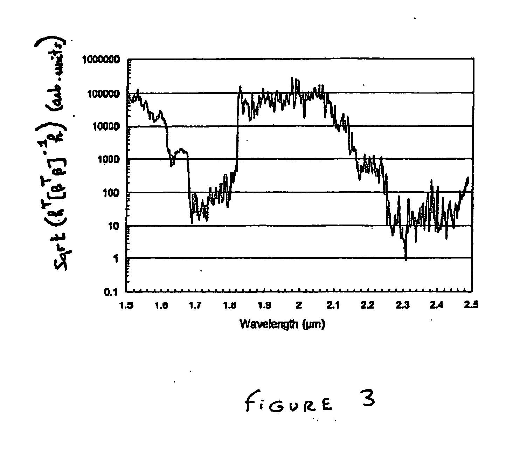

Such a noise transfer factor is plotted versus the central wavelength in figure 3. The noise transfer factor is plotted in a logarithmic scale, showing large variation as a function of central wavelength.

While it is clear that the noise transfer factor is catastrophic for spectral regions where the alkanes do not a have a significant absorption, even for regions where the absorption is large, the noise transfer factor varies strongly as a function of central wavelength. It appears clearly that the main region of interest so as to reduce the noise transfer factor is located around 2.3 $\mu$m.

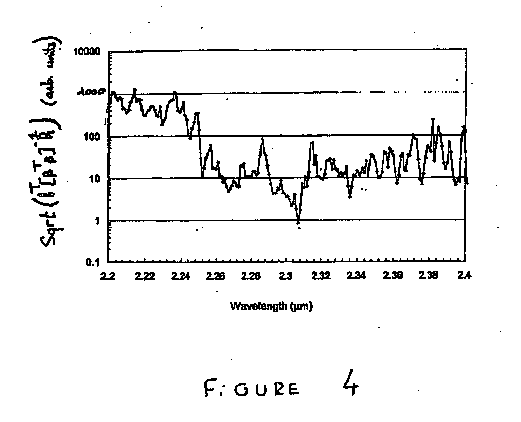

A zoom around this wavelength is shown in figure 4. More precisely, the region ranging from 2.292 to 2.310 $\mu$m is the most favorable for reducing the noise transfer factor.

Thus, in order to perform an accurate superior calorific value measurement via composition analysis of natural gas utilizing laser absorption spectroscopy, the central wavelength has to belong to the [2.292-2.310 $\mu$m] interval.

Naturally, the present invention is not limited to the examples and embodiment described and shown, and the invention can be the subject of numerous variants that are available to the person skilled in the art.

For instance, the calculation mentioned above was made by taking Methane, Ethane, Propane, Butane and Isobutane but other gases such as Pentane may also be taken into account.

**Claims**

1. Method for performing composition analysis of a natural gas sample comprising a plurality of alkanes, via tunable laser diode (2) absorption spectroscopy comprising the steps of:

   - using said tunable laser diode (2) for sending a laser beam through a cell (3) comprising said gas sample, said laser diode (2) being scanned in wavelength via a current or temperature driver with a predetermined continuous single mode tuning range and a central wavelength comprised in the [2.292 $\mu$m - 2.310 $\mu$m] interval,
   - after interaction of said laser beam (2) with said gas sample within said cell, detecting said laser beam and determining the absorption coefficients of the natural gas sample, obtained respectively at the scanned wavelengths, and

- deducing the concentrations of the alkanes in the natural gas sample, from said absorption coefficients.

2. Method according to claim 1, wherein said predetermined tuning range is equal to 4 nm.

3. Method according to claim 1 or 2, wherein it further comprises a step of deducing the superior calorific value (SCV) of the natural gas sample from said concentrations.

4. Method according to claim 3, the SCV is defined through the following linear relationship: $SCV = h^T C$, wherein $h^T$ represents the molar calorific values of one alkane, and C represents the concentrations of said alkanes in the natural gas sample.

5. Method according to any one of the preceding claims, wherein the plurality of alkanes includes at least two of the alkanes chosen among methane, ethane, propane, butane, isobutene, and pentane.

**Patentansprüche**

1. Verfahren zum Durchführen einer Zusammensetzungsanalyse einer Erdgasprobe, die eine Mehrzahl von Alkanen umfasst, durch Absorptionsspektroskopie mittels durchstimmbarer Laserdiode (2), umfassend die folgenden Schritte:

Verwenden der durchstimmbaren Laserdiode (2) zum Senden eines Laserstrahls durch eine Zelle (3), welche die Gasprobe umfasst, wobei die Laserdiode (2) in der Wellenlänge über einen Strom- oder Temperaturtreiber mit einem vorgegebenen kontinuierlichen Einmoden-Durchstimmbereich und einer zentralen Wellenlänge, die im Intervall von [2,292 μm - 2,310 μm] enthalten ist, abgetastet wird,
Erfassen nach der Interaktion des Laserstrahls (2) mit der Gasprobe innerhalb der Zelle des Laserstrahls und Bestimmen der Absorptionskoeffizienten der Erdgasprobe, die bei den abgetasteten Wellenlängen jeweils erhalten werden, und
Ableiten der Konzentrationen der Alkane in der Erdgasprobe von den Absorptionskoeffizienten.

2. Verfahren nach Anspruch 1, wobei der vorgegebene Durchstimmbereich 4 nm entspricht.

3. Verfahren nach Anspruch 1 oder 2, wobei es ferner einen Schritt des Ableitens des oberen Brennwerts (SCV) der Erdgasprobe von den Konzentrationen umfasst.

4. Verfahren nach Anspruch 3, wobei der SCV durch die folgende lineare Beziehung definiert ist: $SCV = h^T C$, wobei $h^T$ die molaren Brennwerte eines Alkans darstellt, und C die Konzentrationen der Alkane in der Erdgasprobe darstellt.

5. Verfahren nach einem der vorhergehenden Ansprüche, wobei die Mehrzahl von Alkanen mindestens zwei der Alkane umfasst, die aus Methan, Ethan, Propan, Butan, Isobuten und Pentan ausgewählt sind.

**Revendications**

1. Procédé pour effectuer une analyse de composition d'un échantillon de gaz naturel comprenant une pluralité d'alcanes, via une spectroscopie par absorption à diode laser accordable (2), comprenant les étapes consistant à :

- utiliser ladite diode laser accordable (2) pour envoyer un faisceau laser à travers une cellule (3) comprenant ledit échantillon de gaz, ladite diode laser (2) étant balayée en longueurs d'onde via un générateur de courant ou de température ayant un intervalle d'accord en mode unique continu prédéterminé et une longueur d'onde centrale comprise dans l'intervalle [2,292 μm - 2,310 μm],
- après interaction dudit faisceau laser (2) avec ledit échantillon de gaz à l'intérieur de ladite cellule, détecter ledit faisceau laser et déterminer les coefficients d'absorption de l'échantillon de gaz naturel, obtenus respectivement aux longueurs d'onde balayées, et
- déduire desdits coefficients d'absorption les concentrations des alcanes dans l'échantillon de gaz naturel.

2. Procédé selon la revendication 1, dans lequel ledit intervalle d'accord prédéterminé est égal à 4 nm.

3. Procédé selon la revendication 1 ou 2, comprenant en outre une étape consistant à déduire desdites concentrations la valeur calorifique supérieure (SVC) de l'échantillon de gaz naturel.

4. Procédé selon la revendication 3, dans lequel la SCV est définie par la relation linéaire suivante : $SCV = h^T C$, où $h^T$ représente les valeurs calorifiques molaires d'un alcane, et C représente les concentrations desdits alcanes dans l'échantillon de gaz naturel.

5. Procédé selon l'une quelconque des revendications précédentes, dans lequel la pluralité d'alcanes comprend au moins deux alcanes choisis parmi le mé-

9      **EP 1 709 426 B1**      10

thane, l'éthane, le propane, le butane, l'isobutène et le pentane.

FIGURE 1

Not orthogonal

FiGURE 2A

Orthogonal

FiGURE 2B

FIGURE 3

FIGURE 4

**EP 1 709 426 B1**

**REFERENCES CITED IN THE DESCRIPTION**

**Patent documents cited in the description**

- EP 1174705 A